(19) Europäisches Patentamt
European Patent Office
Office européen des brevets

(11) **EP 1 954 925 B1**

(12) **FASCICULE DE BREVET EUROPEEN**

(45) Date de publication et mention
de la délivrance du brevet:
**14.07.2010 Bulletin 2010/28**

(51) Int Cl.:
*F01N 3/08* *(2006.01)*    *F01N 11/00* *(2006.01)*
*F02D 41/02* *(2006.01)*

(21) Numéro de dépôt: **06842021.5**

(22) Date de dépôt: **22.11.2006**

(86) Numéro de dépôt international:
**PCT/FR2006/051210**

(87) Numéro de publication internationale:
**WO 2007/063235 (07.06.2007 Gazette 2007/23)**

(54) **SYSTEME DE DETERMINATION DU NIVEAU D'EMPOISONNEMENT EN SOUFRE DE MOYENS DE DEPOLLUTION INTEGRES DANS UNE LIGNE D'ECHAPPEMENT D'UN MOTEUR DE VEHICULE AUTOMOBILE**

SYSTEM ZUR ERKENNUNG DES GRADES DER SCHWEFELVERGIFTUNG EINES IN DER ABGASLEITUNG EINES KRAFTFAHRZEUGMOTORS INTEGRIERTEN ENTGIFTUNGSMITTELS

SYSTEM FOR DETERMINING THE LEVEL OF SULPHUR POISONING OF DEPOLLUTION MEANS INTEGRATED INTO THE EXHAUST LINE OF A MOTOR VEHICLE ENGINE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **01.12.2005 FR 0512222**

(43) Date de publication de la demande:
**13.08.2008 Bulletin 2008/33**

(73) Titulaire: **PEUGEOT CITROËN AUTOMOBILES S.A.**
**78140 Vélizy Villacoublay (FR)**

(72) Inventeurs:
• **AUDOUIN, Arnaud**
  **F-75018 Paris (FR)**

• **FROUVELLE, Benoît**
  **F-75015 Paris (FR)**

(74) Mandataire: **Ménès, Catherine**
**Peugeot Citroën Automobiles SA**
**Propriété Industrielle (LG081)**
**18, rue des Fauvelles**
**92250 La Garenne Colombes (FR)**

(56) Documents cités:
**EP-A- 1 324 037      EP-A1- 0 869 263**
**EP-A1- 1 471 219      EP-A2- 0 911 499**
**EP-A2- 1 041 263      FR-A- 2 838 479**

EP 1 954 925 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un système de détermination du niveau d'empoisement en soufre de moyens de dépollution intégrés dans une ligne d'échappement d'un moteur de véhicule automobile.

Plus particulièrement, l'invention se rapporte à un tel système dans lequel le moteur est associé à des moyens de pilotage de son fonctionnement pour commuter celui-ci entre des fonctionnements en mode pauvre de stockage du soufre et en mode riche de déstockage de celui-ci

Un tel système de post-traitement des gaz de type par exemple piège à NOx, est un système séquentiel qui fonctionne selon un mode de stockage des NOx émis par le moteur dans le piège, en mode pauvre, c'est-à-dire en fonctionnement normal par exemple du moteur Diesel, et un mode de déstockage et de réduction des NOx stockés dans le piège, en mode riche.

Pendant les phases pauvres, c'est-à-dire de stockage des NOx, les sulfates ($SO_2$ $SO_3$) émis par le moteur en faible quantité, se stockent dans le piège sur les mêmes sites de stockage que les NOx. Contrairement aux nitrates, les sulfates ne sont pas déstockés lors des opérations de DeNOx en mode riche. Il en résulte un lent empoisement du piège par le soufre.

Cet empoisement en soufre est problématique car il entraîne une diminution progressive de la performance du piège à NOx, c'est-à-dire une chute de la conversion des NOx. En effet, les sulfates étant stockés sur les mêmes sites que les NOx, une diminution de la capacité de stockage du piège est observée au fur et à mesure de l'empoisement en soufre du piège.

Il est cependant possible de déstocker le soufre présent dans le piège à NOx. Pour cela, il est nécessaire de passer en mode riche à haute température. En effet, une atmosphère de gaz d'échappement riche ne suffit pas à déstocker les sulfates, il faut en plus assurer une température suffisamment élevée, par exemple au moins égale à 700°C.

La difficulté est alors d'assurer la température nécessaire et suffisante pour désulfater le piège. En effet, les hauts niveaux thermiques permettant de déstocker le soufre génèrent un vieillissement thermique du piège à NOx. A haute température, les propriétés des matériaux de stockage, des métaux précieux ou du support, sont progressivement dégradées.

Il est connu de EP 1 041 263 A2 un système de détermination du niveau d'empoisonnement en soufre de moyens de dépollution intégrés dans une ligne d'échappement d'un moteur de véhicule automobile, associé à des moyens de pilotage de son fonctionnement pour commuter celui-ci entre des fonctionnements en mode pauvre de stockage et en mode riche de déstockage, le système comportant des moyens de calcul de la vitesse de stockage du soufre en mode pauvre, des moyens de calcul de la vitesse de déstockage du soufre en mode riche, des moyens de calcul de la quantité de soufre stockée dans les moyens de dépollution au cours du fonctionnement du moteur et des moyens de comparaison de cette quantité de soufre à des valeurs de seuil pour déterminer un niveau d'empoisonnement des moyens de dépollution.

Il est donc primordial de déterminer le déclenchement et la durée de désulfatation de façon opportune.

Le but de l'invention est de proposer un système qui permette de déterminer cette masse de soufre stockée dans le piège et donc le niveau d'empoisement de celui-ci, de façon continue.

A cet effet, l'invention a pour objet un système de détermination du niveau d'empoisonnement en soufre de moyens de dépollution intégrés dans une ligne d'échappement d'un moteur de véhicule automobile, associé à des moyens de pilotage de son fonctionnement pour commuter celui-ci entre des fonctionnements en mode pauvre de stockage et en mode riche de déstockage, caractérisé en ce qu'il comporte des moyens de calcul de la vitesse de stockage du soufre en mode pauvre, des moyens de calcul de la vitesse de déstockage du soufre en mode riche, des moyens de calcul de la quantité de soufre stockée dans les moyens de dépollution au cours du fonctionnement du moteur et des moyens de comparaison de cette quantité de soufre à des valeurs de seuil pour déterminer un niveau d'empoisonnement des moyens de dépollution, et en ce que :

- la vitesse de stockage du soufre est calculée à partir d'une première vitesse de stockage du soufre issu du carburant consommé par le moteur et d'une seconde vitesse de stockage du soufre issu de l'huile de lubrification consommée par le moteur.

Suivant d'autres caractéristiques de l'invention :

- la première vitesse est déterminée selon la relation :

.

$$Qcarb(g/s) = (0.835/3.10^4)*(Qpilot_i+Qmain_i+Qpost_i(mm3/cp))*N_i(tr/min)$$

où :

Qpilot, Qmain, Qpost représentent les consommations lors des différentes injections de carburant dans le moteur, et

N, le régime de rotation du moteur ;

- la seconde vitesse est calculée selon la relation :

$$\text{Teneur soufre huile [ppm]} * \text{Conso huile [g/1000km]}/1000 * \text{Vitesse véhicule [km/h]}/3600 ;$$

T
- la vitesse de déstockage du soufre en mode riche est déterminée selon la relation V deSOx = f ($\lambda_{amont}$, TdeNOx) où ;

$\lambda_{amont}$ représente la richesse en oxygène des gaz d'échappement en amont des moyens de dépollution, délivrée par des moyens de mesure correspondants, et TdeNOx, la température de ceux-ci ;

- la quantité de soufre déterminée est comparée à quatre seuils prédéterminés pour évaluer cinq niveaux d'empoisonnement faible, moyen, élevé, très élevée et critique ; et
- le niveau d'empoisonnement est délivré à un superviseur deSOx raccordé à un contrôleur deSOx adapté pour mettre en oeuvre la désulfatation par enchaînement de phases de fonctionnement en modes pauvre et riche du moteur.

L'invention sera mieux comprise à la lecture de la description qui va suivre, donnée uniquement à titre d'exemple et faite en se référant aux dessins annexés, sur lesquels :

- la Fig.1 représente un schéma synoptique illustrant l'implantation d'une ligne d'échappement en sortie d'un moteur ;
- la Fig.2 représente l'évolution de la capacité de stockage sur plusieurs niveaux d'empoisement en soufre de moyens de dépollution ;
- la Fig.3 illustre le principe d'une désulfatation de tels moyens de dépollution ;
- la Fig.4 représente un schéma synoptique des moyens de pilotage d'un moteur ;
- la Fig.5 représente un schéma synoptique illustrant la structure générale d'un système de détermination selon l'invention ;
- la Fig.6 représente un schéma synoptique illustrant des moyens de calcul de la vitesse de stockage du soufre ;
- la Fig.7 représente un schéma synoptique illustrant des moyens de calcul de la vitesse de déstockage du soufre ; et
- la Fig.8 illustre l'évolution de la masse en soufre dans des moyens de dépollution.

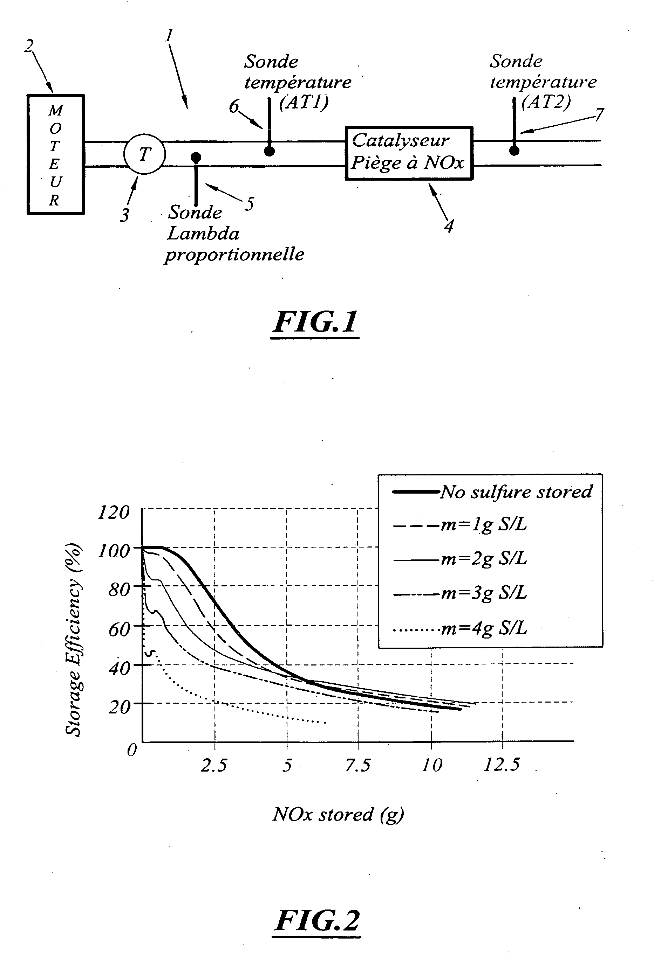

On a en effet illustré sur la figure 1, l'intégration d'une ligne d'échappement désignée par la référence générale 1, en sortie d'un moteur par exemple Diesel de véhicule automobile désigné par la référence générale 2.

Un turbocompresseur désigné par la référence générale 3 peut également être associé à la sortie de ce moteur.

La ligne d'échappement comporte des moyens de dépollution désignés par la référence générale 4, comprenant par exemple un catalyseur de type piège à NOx.

Différents capteurs sont également associés à cette ligne d'échappement.

C'est ainsi par exemple qu'une sonde λ proportionnelle désignée par la référence générale 5 peut être envisagée en amont des moyens de dépollution 4, de même que deux sondes de température l'une appelée AT1 désignée par la référence générale 6, et l'autre AT2 désignée par la référence générale 7, disposées de part et d'autre de ces moyens de dépollution 4.

Comme cela a été mentionné précédemment, l'empoisement en soufre des moyens de dépollution pose un problème, car il entraîne une diminution progressive des performances du piège à NOx, c'est-à-dire une chute de la conversion des NOx.

Ceci est par exemple illustré sur la figure 2 qui présente l'évolution de la capacité de stockage sur plusieurs niveaux d'empoisement au soufre.

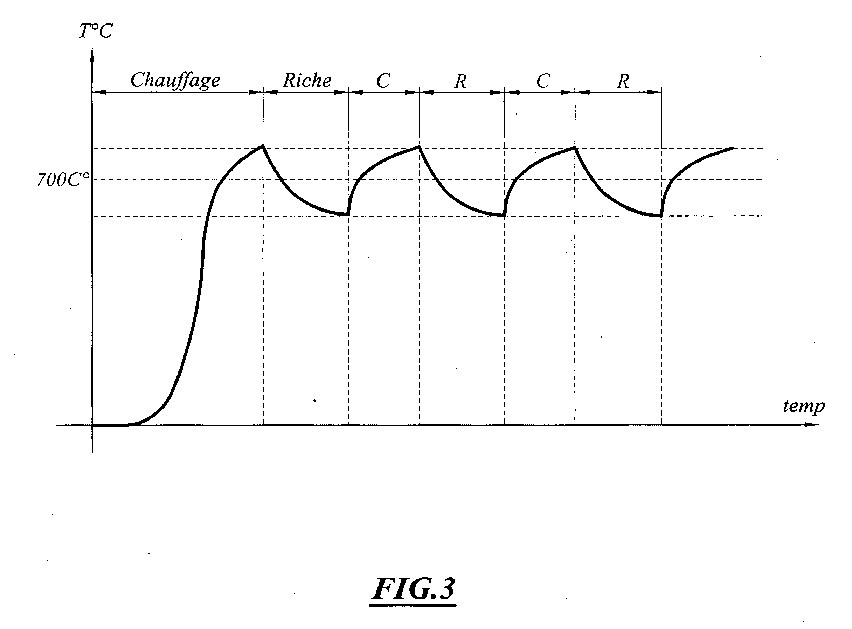

La figure 3 illustre le principe de fonctionnement des phases de désulfatation de tels moyens de dépollution.

En fait, les températures de gaz d'échappement d'un moteur par exemple Diesel comprises entre 150°C et 500°C, sont largement inférieures aux températures nécessaires pour la désulfatation du piège à NOx qui se situent aux environs de 700°C.

Des calibrations spécifiques de chauffage des gaz d'échappement, par exemple en utilisant des post-injections de carburant pendant les phases de détente des cylindres de celui-ci, ont été développées et permettent d'atteindre ces niveaux de température.

De même, une calibration riche a été développée pour permettre de déstocker les NOx et les sulfates comme cela est illustré sur cette figure 3.

Cette figure montre en effet les différentes phases de la désulfatation

- la calibration de chauffage est appliquée jusqu'à ce que le niveau thermique soit suffisant ;
- des passages en mode riche sont effectués pour déstocker les sulfates du piège ; et
- des retours en mode de chauffage peuvent être réalisés pour ajuster la température.

Or, la difficulté d'une telle opération concerne le contrôle de la température dans les conditions dynamiques du véhicule. En particulier, les demandes conducteur, c'est-à-dire les accélérations, les levés de pieds, etc.., ont un impact important sur ces niveaux thermiques.

Une autre difficulté concerne les émissions de $H_2S$, polluant toxique et fortement odorant. Il est acquis que ces émissions peuvent être limitées en effectuant des retours réguliers en mode pauvre, c'est-à-dire en excès d'oxygène. Par conséquent, les passages en mode riche ne doivent pas dépasser une durée prédéfinie permettant de limiter les émissions de $H_2S$.

Le système de détermination selon l'invention est mis en oeuvre dans le cadre général des moyens de pilotage du fonctionnement du moteur du véhicule. Le système selon l'invention concerne le calcul de la masse en soufre présente dans le catalyseur piège à NOx. Elle intervient alors dans la décision d'un superviseur deSOx pour lancer ou au contraire arrêter une phase de désulfatation.

En fait, un tel modèle est intégré dans les moyens de pilotage du moteur et évalue à chaque instant la masse de soufre, cette masse de soufre étant convertie en un niveau d'empoisement qui est transmis au superviseur deSOx qui pilote la décision de lancer une phase de désulfatation. Cette décision est ensuite transmise à un contrôleur deSOx en charge de la réalisation de la désulfatation par enchaînement de phases de chauffage et riche.

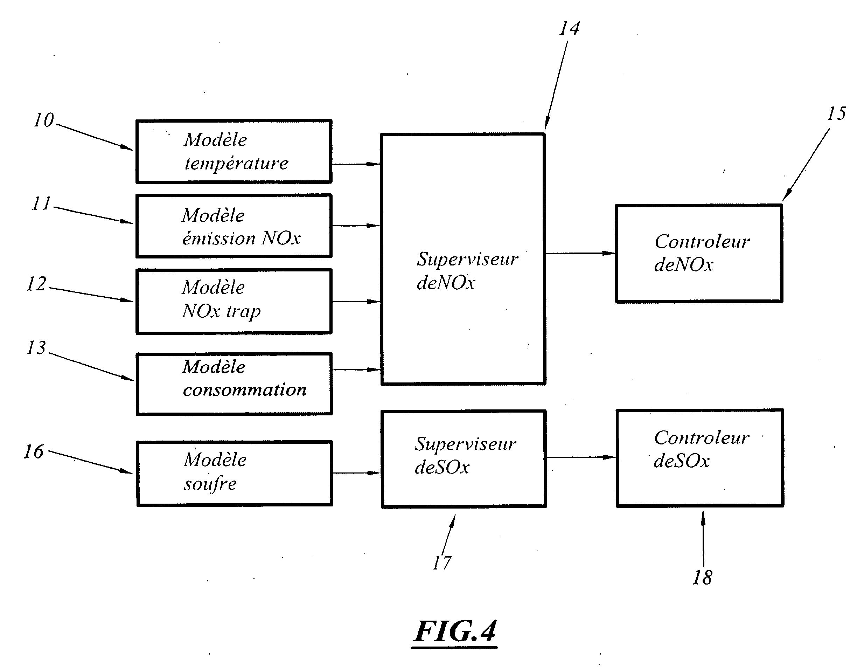

La figure 4 illustre la structure générale de tels moyens de pilotage.

En fait, de tels moyens comportent des moyens formant modèle de température désignés par la référence générale 10 sur cette figure, des moyens formant modèle d'émission de NOx désignés par la référence générale 11, des moyens formant modèle de piège à NOx désignés par la référence générale 12 et des moyens formant modèle de consommation désignés par la référence générale 13. Ces différents modèles sont raccordés à un superviseur deNOx désigné par la référence générale 14, lui-même raccordé à un contrôleur deNOx désigné par la référence générale 15.

Le modèle formant estimateur de niveau d'empoisement en soufre du piège est désigné par la référence générale 16 et est relié à un superviseur deSOx désigné par la référence générale 17, lui-même raccordé à un contrôleur deSOx désigné par la référence générale 18.

La masse en soufre est calculée en continu. A cet effet, deux calculs différents sont effectués. En effet, l'un de ces calculs concerne la vitesse de stockage du soufre et l'autre la vitesse de déstockage de celui-ci. Selon que l'on est hors deSOx ou en deSOx, un commutateur vient intégrer l'une ou l'autre des vitesses pour estimer en continu la masse de soufre dans le piège.

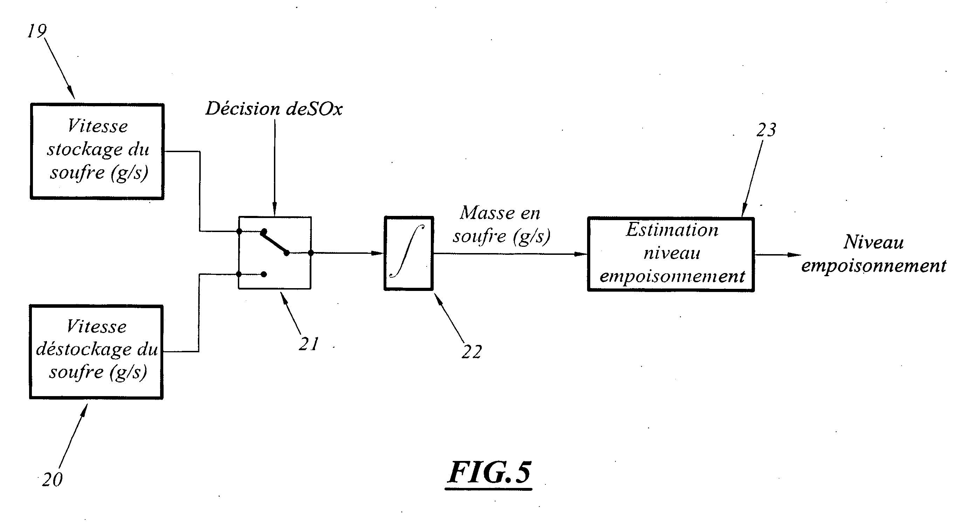

Ceci est par exemple illustré sur la figure 5, où l'on voit que des estimateurs de vitesse de stockage de soufre et de vitesse de déstockage de soufre respectivement 19 et 20, sont associés à un commutateur 21 basculant entre l'une ou l'autre des sorties de ces modules de calcul 19 et 20, selon que l'on est en deSOx ou hors deSOx. En 22, on a illustré l'intégrateur permettant d'obtenir la masse en soufre présente, qui est ensuite délivrée à un estimateur de niveau d'empoisement 23 permettant de délivrer une information de niveau d'empoisement.

Le calcul de la vitesse de stockage du soufre est en fait la somme de deux vitesses de stockage, à savoir celle due au soufre contenu dans le carburant consommé par le moteur et celle due au soufre contenu dans l'huile de lubrification consommée par le moteur.

La vitesse de stockage en soufre issu du carburant consommé par le moteur est calculée en supposant la teneur en soufre du carburant constante, à savoir par exemple 10 ppm. La consommation instantanée du moteur en carburant (Qcarb) est déterminée en réalisant la somme des débits des différentes injections utilisées, à savoir les injections pilotes (Qpilot) principales, (Qmain) et post-injections (Qpost) selon la relation :

$$Qcarb(g/s) = (0{,}835/3.10^4)^*(Qpilot_i + Qmain_i + Qpost_i(mm3/cp))^*N_i(tr/min)$$

dans laquelle N représente le régime de rotation du moteur.

Cette consommation instantanée est ensuite multipliée par la teneur en soufre du carburant, ce qui donne la vitesse de stockage issue de celui-ci.

La vitesse de stockage du soufre issu de l'huile consommée par le moteur est calculée à partir de la consommation d'huile par le moteur, ce qui est une valeur calibrable par exemple en g/1000 km parcouru, multipliée par la teneur de l'huile en soufre qui est également une valeur calibrable.

Cette vitesse de stockage est alors déterminée selon la relation :

$$\text{Teneur soufre huile } [ppm]^*\text{Conso huile } [g/1000km]/1000^*\text{Vitesse véhicule } [km/h]/3600.$$

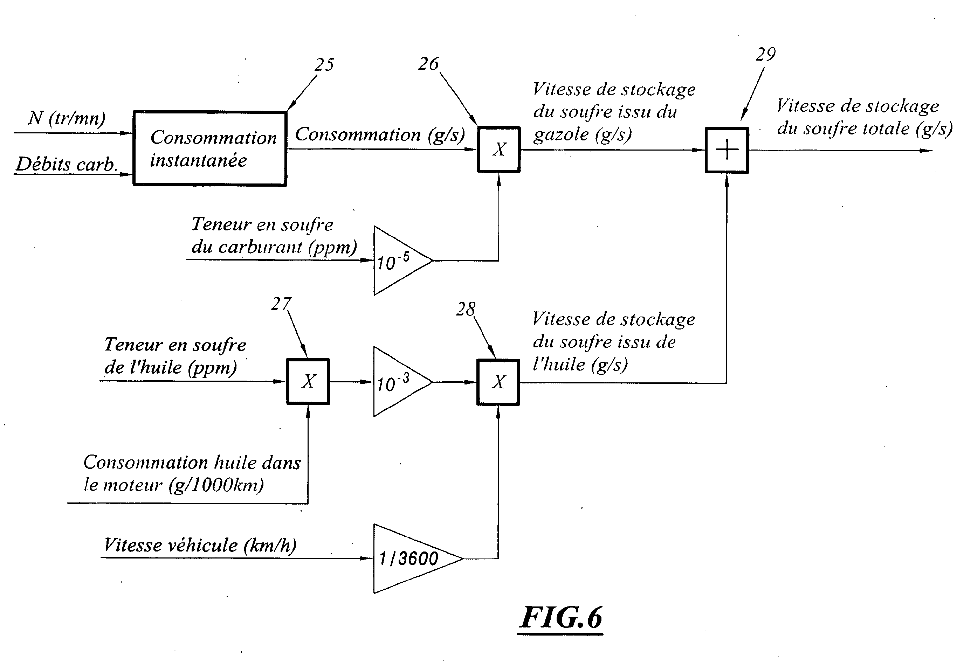

La vitesse de stockage totale du soufre est donc la somme de celle issue du carburant et de celle issue de l'huile de lubrification, comme cela est illustré sur la figure 6.

On reconnaît en effet sur cette figure 6, un modèle de calcul de la consommation instantanée du moteur désigné par la référence générale 25 recevant en entrée une information de régime de rotation du moteur et de débit en carburant. La consommation est ensuite associée à la teneur en soufre de celui-ci au niveau d'un multiplicateur 26 pour délivrer une information de vitesse de stockage issue du carburant consommé.

Des calculs à partir de la teneur en soufre de l'huile de lubrification, de la consommation d'huile dans le moteur et de la vitesse du véhicule, sont également réalisés par des multiplicateurs 27 et 28, pour délivrer une vitesse de stockage du soufre issu de l'huile de lubrification consommée par le moteur.

Ces deux vitesses de stockage sont alors additionnées dans un sommateur 29 pour délivrer la vitesse de stockage totale du soufre.

La vitesse de déstockage est quant à elle calculée en cas de décision de deSOx émanant du superviseur deSOx. La masse de soufre dans les moyens de dépollution diminue à chaque passage en mode de fonctionnement riche du moteur. On utilise alors un modèle de déstockage pour représenter l'évolution de la masse en soufre durant une décision de deSOx.

On définit pour cela une vitesse de déstockage du soufre en mode riche $V_{deSOx}$ (g/s) calibrable dépendant de la valeur de la richesse des gaz telle que délivrée par la sonde lambda proportionnelle en sortie du moteur et désignée par la référence générale 5 sur la figure 1 et de la température TdeNOx à l'intérieur du catalyseur piège à NOx, modélisée dans le modèle de température.

Ainsi, lorsque DecisionDeSOx = 1, la vitesse de déstockage du soufre obéit à la règle suivante : .

SI {Décision deSOx=1}

- SI$\lambda_{amont} \geq 1$ : $V_{deSOx} = 0$
- SINON $V_{deSOx} = f(\lambda_{amount,}\ TdeNOx)$

SINON

- $V_{deSOx} = 0$.

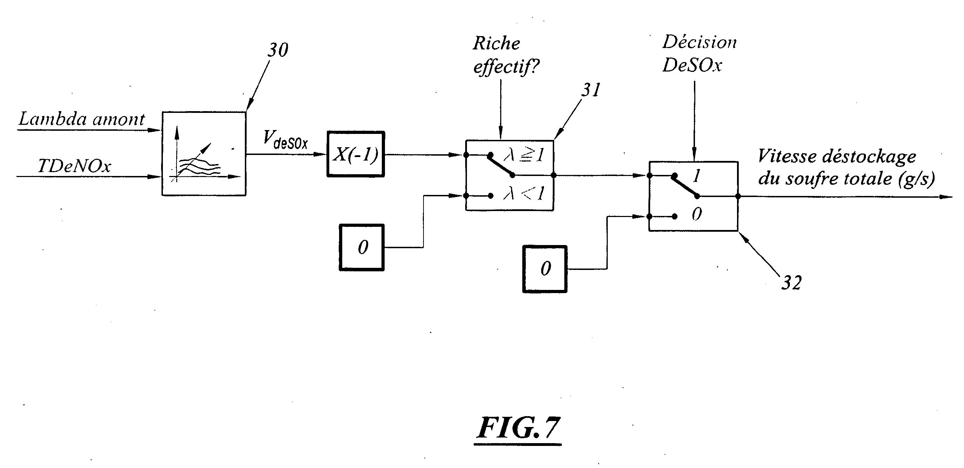

Ceci est illustré sur la figure 7 où l'on voit que la vitesse de déstockage du soufre $V_{deSOx}$ est délivrée à partir d'une cartographie 30 recevant en entrée une information issue de la sonde Lambda et de la température TdeNOx. Les modules de commutation 31 et 32 permettent de prendre en compte le mode de fonctionnement du moteur et l'état de décision afin de délivrer la vitesse de déstockage du soufre.

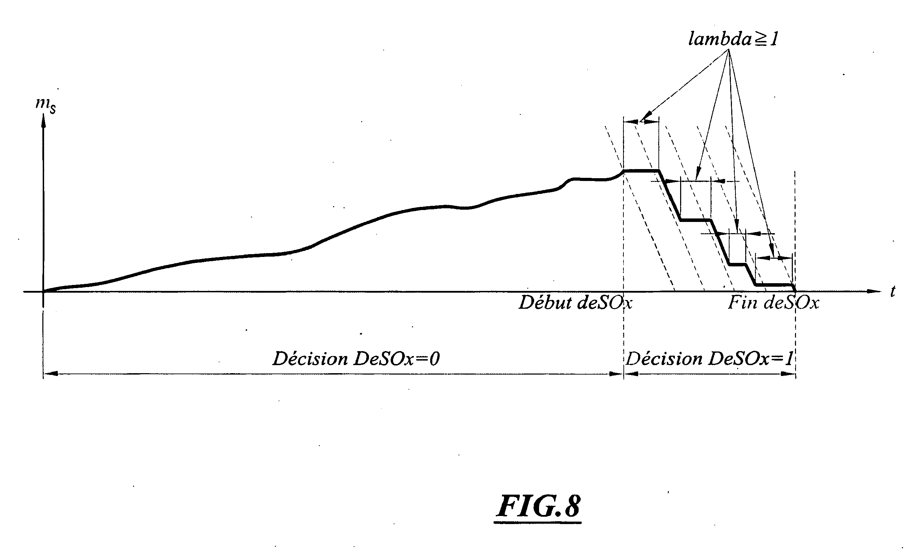

A partir de ces différentes informations, un intégrateur prend alors en compte la vitesse de stockage totale hors deSOx (Décision deSOx = 0) ou la vitesse de déstockage en deSOx (Décision deSOx =1). Il en ressort la masse de soufre présente dans le piège. L'évolution de cette masse en soufre dans le piège est illustrée sur la figure 8.

Ensuite cette quantité de soufre est comparée à différents seuils, par exemple prédéterminés, pour estimer un niveau d'empoisonnement des moyens de dépollution.

Ainsi, par exemple, cette masse peut être comparée à quatre niveaux de seuil prédéterminés pour définir cinq niveaux d'empoisonnement, à savoir un niveau d'empoisonnement faible, un niveau moyen, un niveau élevé, un niveau très élevé et un niveau critique, le niveau correspondant étant transmis au superviseur deSOx et intervenant dans la décision de lancer et d'arrêter une désulfatation.

On conçoit alors qu'un tel système présente un certain nombre d'avantages notamment au niveau de sa simplicité dans la mesure où la stratégie proposée est simple et n'implique pas une forte charge en termes de codage.

De même, il y a peu de valeurs à calibrer et ce type de stratégie est intégrable dans un contrôle moteur embarqué.

De plus, un tel système est complet dans la mesure où il prend en compte l'ensemble des phénomènes liés à l'empoisonnement des moyens de dépollution par le soufre, à savoir le soufre stocké provenant à la fois du soufre présent dans le carburant consommé par le moteur qui présente une teneur faible mais une consommation élevée et dans le lubrifiant qui présente une teneur forte mais une consommation faible. Le stockage intervient également uniquement en mode pauvre et en basse température. Il n'y a pas de stockage ni déstockage du soufre en mode de chauffage deSOx. En effet, la température est trop élevée pour stocker le soufre et les gaz d'échappement sont trop pauvres (excès d'oxygène) pour déstocker le soufre.

Par ailleurs, un tel système est également évolutif dans la mesure où la stratégie mise en oeuvre suppose une teneur en soufre constante dans le carburant et le lubrifiant. Le calcul étant relativement simple et éclaté. Il est possible facilement de prendre en compte d'autres contraintes, à savoir par exemple un diagnostic embarqué de la performance du catalyseur à l'aide d'un capteur NOx ou d'une sonde Lambda en aval du piège à NOx en modifiant certains paramètres ou valeurs calibrables.

Bien entendu, d'autres modes de réalisation encore peuvent être envisagés.

## Revendications

1. Procédé de détermination du niveau d'empoisonnement en soufre de moyens de dépollution (4) intégrés dans une ligne d'échappement (1) d'un moteur (2) de véhicule automobile, associé à des moyens de pilotage de son fonctionnement pour commuter celui-ci entre des fonctionnements en mode pauvre de stockage et en mode riche de déstockage,
comportant des moyens (19) de calcul de la vitesse de stockage du soufre en mode pauvre, des moyens (20) de calcul de la vitesse de déstockage du soufre en mode riche, des moyens (21,22) de calcul de la quantité de soufre stockée dans les moyens de dépollution au cours du fonctionnement du moteur et des moyens de comparaison (23) de cette quantité de soufre à des valeurs de seuil pour déterminer un niveau d'empoisonnement des moyens de dépollution, **caractérisé en ce que** la vitesse de stockage du soufre est calculée à partir d'une première vitesse (25, 26) de stockage du soufre issu du carburant consommé par le moteur et d'une seconde vitesse (27, 28) de stockage du soufre issu de l'huile de lubrification consommée par le moteur.

2. Procédé selon la revendication 1, **caractérisé en ce que** la première vitesse est déterminée selon la relation :

$$Qcarb(g/s) = (0.835/3.10^4)^*(Qpilot_i + Qmain_i + Qpost_i(mm3/cp))^*N_i(tr/min)$$

où :

Qpilot, Qmain, Qpost représentent les consommations lors des différentes injections de carburant dans le moteur, et
N, le régime de rotation du moteur.

3. Procédé selon la revendication 2, **caractérisé en ce que** la seconde vitesse est calculée selon la relation :

$$\text{Teneur soufre huile } [ppm]^*\text{Conso huile } [g/1000km]/1000^*\text{Vitesse véhicule } [km/h]/3600.$$

4. Procédé selon l'une quelconque des revendications précédentes, **caractérisé en ce que** la vitesse de déstockage du soufre en mode riche est déterminée selon la relation $V\,deSOx = f(\lambda_{amont}, TdeNOx)$
où ;

$\lambda_{amont}$ représente la richesse en oxygène des gaz d'échappement en amont des moyens de dépollution, délivrée par des moyens de mesure correspondants (5), et
TdeNOx, la température de ceux-ci.

5. Procédé selon l'une quelconque des revendications précédentes, **caractérisé en ce que** la quantité de soufre déterminée est comparée à quatre seuils prédéterminés pour évaluer cinq niveaux d'empoisonnement faible, moyen, élevé, très élevée et critique.

6. Procédé selon l'une quelconque des revendications précédentes, **caractérisé en ce que** le niveau d'empoisonnement, est délivré à un superviseur deSOx (17) raccordé à un contrôleur deSOx (18) adapté pour mettre en oeuvre la désulfatation par enchaînement de phases de fonctionnement en modes pauvre et riche du moteur.

## Claims

1. Method for determining the level of sulphur poisoning in pollution control means (4) integrated into an exhaust line (1) of a motor vehicle engine (2) associated with means for controlling its operation to switch the engine between operating in lean mode for storage and rich mode for release, comprising means (19) for calculating the sulphur storage rate in lean mode, means (20) for calculating the sulphur release rate in rich mode, means (21, 22) for calculating the quantity of sulphur stored in the pollution control means while the engine is operating, and means (23) for comparing this quantity of sulphur to threshold values so as to determine a level of poisoning in the pollution control means, **characterized in that** the sulphur storage rate is calculated from a first storage rate (25, 26) for the sulphur coming from the fuel consumed by the engine and a second storage rate (27, 28) for the sulphur coming from the lubricating oil consumed by the engine.

2. Method according to Claim 1, **characterized in that** the first rate is determined by the relation:

$$\texttt{Qcarb(g/s)(0.835/3.10}^{4}\texttt{)*(Qpilot}_{i}\texttt{+Qmain}_{i}\texttt{+Qpost}_{i}\texttt{(mm3/cp))*}$$
$$\texttt{N}_{i}\texttt{(tr/min), where:}$$

Qpilot, Qmain, Qpost represent consumption rates during the various fuel injections to the engine, and N represents the engine rotation speed.

3. Method according to Claim 2, **characterized in that** the second rate is calculated from the relation:

$$\texttt{Oil sulphur content [ppm]*Oil cons}$$
$$\texttt{[g/1000km]/1000*Vehicle speed [km/h]/3600.}$$

4. Method according to any of the preceding claims, **characterized in that** the sulphur release rate in rich mode is determined by the relation V deSOx=f ($\lambda_{upstream}$, TdeNOx), where:

   $\lambda_{upstream}$ represents the exhaust gas oxygen content upstream of the pollution control means, provided by corresponding measuring means (5), and
   TdeNOx represents the temperature thereof.

5. Method according to any of the preceding claims, **characterized in that** the quantity of sulphur which is determined is compared with four preset thresholds for evaluating five levels of poisoning: low, medium, high, very high and critical.

6. Method according to any of the preceding claims, **characterized in that** the poisoning level is sent to a deSOx supervisor (17) linked to a deSOx controller (18) adapted to implement desulphurization by sequencing lean and rich-mode engine operating phases.

## Patentansprüche

1. Verfahren zum Bestimmen des Schwefelvergiftungsniveaus von Reinigungsmitteln (4), die in eine Auspufflinie (1) eines Motors (2) eines Kraftfahrzeugs eingebaut sind, verbunden mit Mitteln zum Steuern seines Funktionierens, um dieses zwischen Betriebsarten im mageren Einlagermodus und reichhaltigen Auslagermodus umzuschalten, das Mittel (19) zum Berechnen der Einlagergeschwindigkeit des Schwefels im mageren Modus, Mittel (20) zum Berechnen der Auslagergeschwindigkeit des Schwefels im reichhaltigen Modus, Mittel (21, 22) zum Berechnen der in den Reinigungsmitteln im Laufe des Betriebs des Motors eingelagerten Schwefelmenge sowie Mittel (23) zum Vergleichen dieser Schwefelmenge mit Schwellenwerten aufweist, um ein Vergiftungsniveau der Reinigungsmittel zu bestimmen, **dadurch gekennzeichnet, dass** die Einlagergeschwindigkeit des Schwefels ausgehend von einer ersten Einlagergeschwindigkeit (25, 26) des Schwefels, der aus dem von dem Motor verbrauchten Kraftstoff stammt, und einer zweiten Einlagergeschwindigkeit (27, 28) des Schwefels, der aus dem von dem Motor verbrauchten Schmieröl stammt, berechnet wird.

**2.** Verfahren nach Anspruch 1, **dadurch gekennzeichnet, dass** die erste Geschwindigkeit gemäß der folgenden Gleichung festgelegt wird:

$$\text{Qcarb(g/s)} = (0,835/3.10^4)*(\text{Qpilot}_i + \text{Qmain}_i + \text{Qpost}_i (\text{mm}^3/\text{cp}))*N_i(\text{U/Min.})$$

wobei:

Qpilot, Qmain, Qpost die Verbrauchswerte bei unterschiedlichen Kraftstoffeinspritzungen in den Motor darstellen, und
N die Drehzahl des Motors ist.

**3.** Verfahren nach Anspruch 2, **dadurch gekennzeichnet, dass** die zweite Geschwindigkeit gemäß der folgenden Gleichung berechnet wird:

$$\text{Ölschwefelgehalt [ppm]} * \text{Ölverbrauch [g/1000 km]} / 1000 * \text{Fahrzeuggeschwindigkeit [km/h]}/3600.$$

**4.** Verfahren nach einem der vorhergehenden Ansprüche, **dadurch gekennzeichnet, dass** die Auslagergeschwindigkeit des Schwefels im reichhaltigen Modus gemäß der Gleichung V von $SO_x$ = f ($\lambda_{\text{stromaufwärts}}$, T von $NO_x$) bestimmt wird,
wobei:

$\lambda_{\text{stromaufwärts}}$ die Reichhaltigkeit an Sauerstoff der Abgase stromaufwärts der Reinigungsmittel, geliefert von entsprechenden Messenmitteln (5) darstellt, und
T von $NO_x$ deren Temperatur ist.

**5.** Verfahren nach einem der vorhergehenden Ansprüche, **dadurch gekennzeichnet, dass** die bestimmte Schwefelmenge mit vier vorbestimmten Schwellenwerten verglichen wird, um fünf Vergiftungsniveaus, nämlich niedrig, mittel, hoch, sehr hoch und kritisch zu bewerten.

**6.** Verfahren nach einem der vorhergehenden Ansprüche, **dadurch gekennzeichnet, dass** das Vergiftungsniveau an einen $SO_x$-Supervisor (17) geliefert wird, der an einen $SO_x$-Controller (18) angeschlossen ist, der das Desulfatieren durch Verketten von Betriebsphasen im mageren und reichhaltigen Modus des Motors umsetzen kann.

**_FIG.1_**

**_FIG.2_**

**_FIG.3_**

EP 1 954 925 B1

```
10 ──→ │ Modèle        │
       │ température   │ ─→

11 ──→ │ Modèle        │
       │ émission NOx  │ ─→        │ Superviseur │ ─→ │ Controleur │
                                   │ deNOx       │    │ deNOx      │ ←── 15
12 ──→ │ Modèle        │ ─→        │       14    │
       │ NOx trap      │

13 ──→ │ Modèle        │ ─→
       │ consommation  │

16 ──→ │ Modèle        │ ─→        │ Superviseur │ ─→ │ Controleur │
       │ soufre        │          │ deSOx       │    │ deSOx      │
                                        17              18
```

**_FIG.4_**

EP 1 954 925 B1

*Décision deSOx*

*Vitesse stockage du soufre (g/s)*

*19*

*Vitesse déstockage du soufre (g/s)*

*20*

*21*

*22*

*Masse en soufre (g/s)*

*Estimation niveau empoisonnement*

*23*

*Niveau empoisonnement*

**_FIG.5_**

**N (tr/mn)** → **Consommation instantanée** [25] → **Consommation (g/s)** → **X** [26] → Vitesse de stockage du soufre issu du gazole (g/s) → **+** [29] → Vitesse de stockage du soufre totale (g/s)

**Débits carb.** →

Teneur en soufre du carburant (ppm) → $10^{-5}$ →

Teneur en soufre de l'huile (ppm) → **X** [27] → $10^{-3}$ → **X** [28] → Vitesse de stockage du soufre issu de l'huile (g/s)

Consommation huile dans le moteur (g/1000km) →

Vitesse véhicule (km/h) → $1/3600$ →

**_FIG.6_**

EP 1 954 925 B1

_Lambda amont_

_TDeNOx_

30

$V_{deSOx}$

$X(-1)$

0

**Riche effectif?**

31

$\lambda \geqq 1$

$\lambda < 1$

0

**Décision DeSOx**

1

0

32

_Vitesse déstockage du soufre totale (g/s)_

# *FIG.7*

EP 1 954 925 B1

*FIG.8*

**EP 1 954 925 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 1041263 A2